# EUROPEAN PATENT APPLICATION

(11) **EP 4 434 940 A1**
(43) Date of publication of application: **25.09.2024**
(21) Application number: 24164995.3
(22) Date of filing: 21.03.2024
(51) Int. Cl.: C01D 15/02, C22B 1/00, C22B 3/06, C22B 3/08, C22B 3/10, C22B 3/22, C22B 3/44, C22B 7/00, C22B 26/12, C25C 1/02, H01M 6/52, H01M 10/54

(54) **METHOD OF RECOVERING ACTIVE METAL OF LITHIUM SECNDARY BATTERY**

(30) Priority: 24.03.2023 KR 20230038690
(71) Applicant: SK Innovation Co., Ltd., Seoul 03188 (KR)
(72) Inventor: YOO, Su Min, 34124 Daejeon (KR); LEE, Hyeon Hui, 34124 Daejeon (KR); PARK, Se Eun, 34124 Daejeon (KR)
(74) Representative: Frick, Robert

(57) **Abstract**

The invention relates to a method of recovering an active metal of a lithium secondary battery, wherein an acidic leaching liquid is added to a material to be recovered which contains a lithium metal oxide to form a mixture including a first active metal solution and a leached residue. The formed mixture is subjected to solid-liquid separation for separating the first active metal solution from the leached residue to form a second active metal solution. A lithium hydroxide aqueous solution containing an iron salt is added to the second active metal solution to form a third active metal solution from which impurities are removed or reduced. A lithium precursor is recovered from the third active metal solution.

## Description

### BACKGROUND

### 1. Field

The present invention relates to a method of recovering an active metal of a lithium secondary battery. More particularly, the present invention relates to a method of recovering an active metal of a cathode active material in a lithium secondary battery

### 2. Description of the Related Art

A secondary battery has been widely employed as a power source of a mobile electronic device such as a camcorder, a mobile phone, a laptop computer, etc., and a vehicle such as an electric automobile, a hybrid vehicle, etc. For example, a lithium secondary battery is being actively developed due to high operational voltage and energy density per unit weight, a high charging rate, a compact dimension, etc.

For example, the lithium secondary battery may include an electrode assembly including a cathode, an anode and a separation layer (separator), and an electrolyte immersing the electrode assembly. The lithium secondary battery may further include an outer case having, e.g., a pouch shape for accommodating the electrode assembly and the electrolyte.

A lithium metal oxide may be used as an active material for a cathode of the lithium secondary battery. The lithium metal oxide may additionally contain valuable metals such as iron, nickel, cobalt, manganese, etc.

The above-described high-cost valuable metals are used in the cathode active material, and environmental protection issues have recently been highlighted. Accordingly, methods on a recycling method of the cathode active material for a cathode are being researched.

### SUMMARY

The present invention aims to provide a method of recovering an active metal of a lithium secondary battery having improved purity and efficiency.

Against this background, the invention proposes a method of recovering an active metal of a lithium secondary battery, wherein an acidic leaching liquid is added to a material to be recovered which contains a lithium metal oxide to form a mixture including a first active metal solution and a leached residue. The formed mixture is subjected to solid-liquid separation for separating the first active metal solution from the leached residue to form a second active metal solution. A lithium hydroxide aqueous solution containing an iron salt is added to the second active metal solution to form a third active metal solution from which impurities are removed or reduced. A lithium precursor is recovered from the third active metal solution.

In some embodiments, the leached residue may be washed to generate a washing liquid. The washing liquid may be supplied to the mixture or the second active metal solution.

In some embodiments, the washing may be repeatedly performed in a plurality of cycles. The washing liquid generated from earlier cycles of the plurality of cycles may be supplied to the second active metal solution. The washing liquid generated from later cycles of the plurality of cycles may be supplied to the mixture.

In some embodiments, the lithium metal oxide may include a lithium iron phosphate-based active material. The first active metal solution may include lithium sulfate, lithium chloride or lithium nitrate, and the leached residue may include an iron phosphate-based material.

In some embodiments, the material to be recovered may be obtained by pulverizing a waste lithium secondary battery.

In some embodiments, the impurities may contain iron (Fe), phosphorus (P) and aluminum (Al).

In some embodiments, the iron salt may include iron sulfate, iron chloride or iron nitrate, and a residual phosphorus may be precipitated from the second active metal solution in the form of iron phosphate.

In some embodiments, the lithium hydroxide aqueous solution may not contain a salt of an alkali metal other than lithium or an alkaline earth metal.

In some embodiments, in recovering the lithium precursor, lithium sulfate, lithium chloride or lithium nitrate may be converted into lithium hydroxide by an electrodialysis.

In some embodiments, a portion of lithium hydroxide generated by the electrodialysis may be recycled to the formation of the third active metal solution.

In some embodiments, the acidic leaching liquid may include sulfuric acid, hydrochloric acid or nitric acid. Sulfuric acid, hydrochloric acid or nitric acid produced by the electrodialysis may be recycled to the formation of the mixture.

In some embodiments, the acidic leaching liquid may include at least one oxidizing agent selected from the group consisting of hydrogen peroxide, oxygen, ozone and lithium persulfate.

In some embodiments, the lithium hydroxide aqueous solution may be added in an amount from 0.1 wt% to 0.5 wt%, preferably 0.1 wt% to 0.4 wt%, more preferably 0.15 wt% to 0.3 wt% based on a total weight of the second active metal solution.

According to the above-described example embodiments, a lithium concentration contained in a second active metal solution may be increased by performing repeated washing treatment for a precipitation residue, and a lithium precursor may be recovered with a high concentration.

In some embodiments, a lithium hydroxide aqueous solution containing an iron salt may be introduced into the second active metal solution to precipitate remaining impurities, and a solid-liquid separation may be performed to remove the impurities. Accordingly, a third active metal solution may be more easily converted into lithium hydroxide through an electrodialysis, and a high purity lithium precursor may be recovered.

### BRIEF DESCRIPTION OF THE DRAWINGS

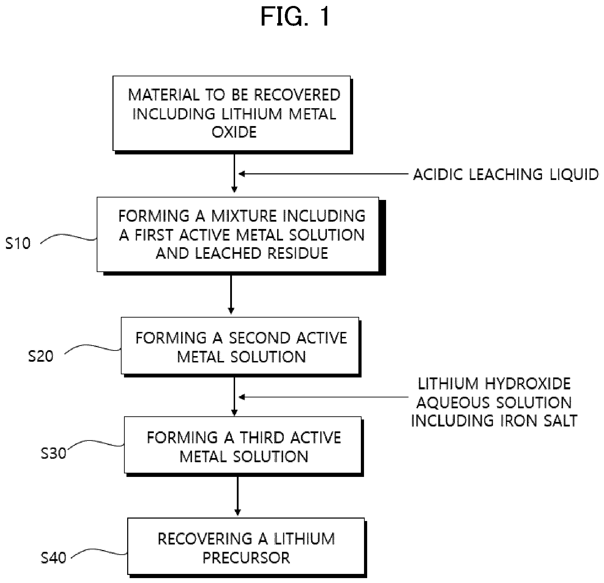

FIG. 1 is a schematic flow-diagram for describing a method of recovering an active metal of a lithium secondary battery in accordance with example embodiments.

### DETAILED DESCRIPTION OF THE EMBODIMENTS

The present invention aims to provide a method for recovering a lithium precursor from a cathode of a waste lithium secondary battery with high purity and high yield through a wet-based process.

The term "precursor" herein is used to comprehensively refer to a compound including a specific metal to provide the specific metal included in an electrode active material.

FIG. 1 is a schematic flow-diagram for describing a method of recovering an active metal of a lithium secondary battery in accordance with example embodiments.

Referring to FIG. 1, an acidic leaching liquid may be added to a material to be recovered including a lithium metal oxide, to form a mixture including a first active metal solution and a leached residue (e.g., process S10).

In some embodiments, the material to be recovered may be obtained by pulverizing a waste lithium secondary battery. For example, the lithium metal oxide may be obtained from a cathode active material of the waste lithium secondary battery or a used lithium secondary battery.

The lithium secondary battery may include an electrode assembly including a cathode, an anode, and a separator interposed between the cathode and the anode. The cathode and the anode may include a cathode material layer and an anode active material layer coated on the cathode current collector and the anode current collector, respectively.

For example, a cathode active material included in the cathode active material layer may include a lithium metal oxide containing lithium and a transition metal.

In some embodiments, the lithium metal oxide may include a compound having a structure represented by Chemical Formula 1.

[Chemical Formula 1] LiFe₍₁₋ₓ₎MₓPO₄

In Chemical Formula 1, M may include at least one selected from the group consisting of Ni, Co, Mn, Mg, Y, Zn, Ru, Ti, Nb, Mo, Cr, Cu, Zr, W, Ir and V, and 0≤x≤1.

In some embodiments, the lithium metal oxide may include a lithium iron phosphate-based active material, e.g., an LFP-based lithium oxide including iron (Fe) and phosphorus (P).

For example, a waste cathode may be recovered by separating a cathode from a waste lithium secondary battery. As described above, the waste cathode may include the cathode current collector (e.g., aluminum (Al)) and the cathode active material layer, and the cathode active material layer may include a conductive material and a binder together with the above-described cathode active material.

The conductive material may include, e.g., a carbon-based material such as graphite, carbon black, graphene, carbon nanotube, etc. The binder may include, e.g., a resin material such as a vinylidene fluoride-hexafluoropropylene copolymer (PVDF-co-HFP), polyvinylidene fluoride (PVDF), polyacrylonitrile, polymethylmethacrylate, etc.

In some embodiments, the waste cathode may be pulverized to obtain the material to be recovered. Accordingly, the material to be recovered may include the lithium metal oxide, and may include, e.g., the lithium iron phosphate-based active material (e.g., LiFePO₄).

The material to be recovered may include some components derived from the cathode current collector, the binder, or the conductive material. In one embodiment, the material to be recovered may essentially or substantially consist of the lithium metal oxide particles.

In some embodiments, heat treatment may be performed before a reaction by introducing the acidic leaching liquid into the material to be recovered. Impurities such as the conductive material and the binder included in the material to be recovered may be removed or reduced by the heat treatment, thereby increasing a purity of the lithium metal oxide.

A temperature of the heat treatment may be in a range from, e.g., 100°C to 500°C or from 350°C to 450°C. Within the above range, the impurities may be removed, and decomposition and damages of the lithium metal oxide may be prevented.

An acidic leaching liquid may be added to the material to be recovered including the lithium metal oxide prepared according to the above-described embodiments to form the mixture including the first active metal solution and the leached residue.

For example, the cathode may be separated from the waste lithium secondary battery, and then the acidic leaching liquid may be added to the separated cathode. In this case, the cathode active material layer may be peeled off from the cathode current collector, and the lithium metal oxide may be dissolved in the acidic leaching liquid.

In some embodiments, the acidic leaching liquid may include at least one oxidizing agent selected from a group consisting of hydrogen peroxide, oxygen, ozone and lithium persulfate.

For example, the oxidizing agent may oxidize iron (Fe) contained in the lithium metal oxide, e.g., the lithium iron phosphate-based active material (e.g., LiFePO₄) from a divalent state to a trivalent stated to form a precipitate in the form of iron phosphate (for example, FePO₄). For example, the acidic leaching liquid may include hydrogen peroxide capable of preventing an incorporation of cations.

In some embodiments, an equivalent ratio of the lithium metal oxide to the oxidizing agent may be 1:0.4 to 1:4. For example, the above equivalent ratio may indicate that 0.4 mol to 4 mol of the oxidizing agent is used relative to 1 mol of the lithium metal oxide.

For example, the equivalent ratio of the lithium metal oxide and the oxidizing agent may be in a range from 1:0.5 to 1:3.5, from 1: 1 to 1:3.0, or from 1:1.5 to 1:2.5. Within this range, an amount of iron oxidized from the divalent state to the trivalent state and an amount of a precipitated FePO₄ may become greater, so that a concentration of iron, which may be an impurity, may be reduced.

In some embodiments, the acidic leaching liquid may include sulfuric acid, hydrochloric acid, or nitric acid. Accordingly, lithium included in the lithium metal oxide, e.g., the lithium iron phosphate-based active material (e.g., LiFePO₄) may be selectively leached to form the first active metal solution.

For example, according to a type of acid included in the acidic leaching liquid, the first active metal solution may include lithium sulfate (Li₂SO₄), lithium chloride (LiCl) or lithium nitrate (LiNO₃).

In some embodiments, an equivalent ratio of the lithium metal oxide and the acid may in a range from 0.8:1 to 2.2:1. For example, the equivalent ratio may indicate that 0.8 mol to 2.2 mol of the lithium metal oxide is used relative to 1 mol of the acid.

For example, the equivalent ratio of the lithium metal oxide and the acid may be in a range from 0.9:1 to 2.1:1, from 1.0:1 to 2.0:1, or from 1.1:1 to 2.1:1.

For example, an equivalent ratio of the lithium metal oxide and a monovalent acid (e.g., hydrochloric acid and nitric acid) may be in a range from 0.8:1 to 1.2:1, from 0.9:1 to 1.1:1, or from 1.0:1 to 1.2:1.

For example, an equivalent ratio of the lithium metal oxide and a divalent acid (sulfuric acid) may be in a range from 1.8:1 to 2.2:1, from 1.9:1 to 2.1:1, or from 2.0:1 to 2.2:1.

Within this range, an amount of lithium selectively leached may be increased so that a concentration of lithium contained in the first active metal solution may become high and a high-purity lithium precursor may be obtained.

In some embodiments, the leached residue may include an iron phosphate-based material. For example, the leached residue may include a precipitate formed by precipitation of a trivalent iron in the form of iron phosphate (e.g., FePO₄). Additionally, the leached residue may include a portion of unrecovered lithium that is not included in the first active metal solution.

In some embodiments, the mixture may be formed at a pressure of 0.1 atm to 5 atm, a temperature of 50°C to 90°C, and a rotational rate of 100 rpm to 500 rpm for 1 hour to 4 hours.

For example, in the process S10, the pressure may be in a range from 0.3 atom to 4 atm, from 0.5 atm to 3 atm, or from 0.8 atm to 2 atm, the temperature may be in a range from 60°C to 85°C or from 70°C to 80°C, the rotational rate may be in a range from 150 rpm to 400 rpm, or from 200 rpm to 300 rpm, and a process time may be in a range from 1.5 hours to 3 hours, or from 2 hours to 2.5 hours. Within the ranges of the pressure, the temperature, the rotational rate and the process time, the amount of lithium contained in the first active metal solution and recovered may be further increased.

For example, in a process S20, the formed mixture may be subjected to solid-liquid separation for separating the first active metal solution from the leached residue to form a second active metal solution..

In example embodiments, the leached residue may be washed with water to generate a washed liquid, and the washed liquid may be supplied to the mixture or the second active metal solution.

In some embodiments, the washing may be repeated in a plurality of cycles. The washing liquid generated from early cycles of the cycles may be supplied to the second active metal solution, and the washed liquid generated from later cycles of the cycles may be supplied to the mixture.

Accordingly, lithium contained in the leached residue may be recovered into the second active metal solution, and the second active metal solution may be concentrated to contain a high concentration of lithium.

For example, in process S30, a lithium hydroxide aqueous solution containing an iron salt may be added to the second active metal solution to form a third active metal solution from which impurities are removed or reduced.

In some embodiments, the impurities may contain iron (Fe), phosphorus (P), and aluminum (Al). For example, the impurities may originate from the cathode active material layer and cathode current collector of the waste lithium secondary battery or the used lithium secondary battery.

In some embodiments, the iron salt may include iron sulfate, iron chloride or iron nitrate, and residual phosphorus may be precipitated from the second active metal solution in the form of iron phosphate. For example, iron sulfate may be iron (III) sulfate (Fe₂(SO₄)₃).

For example, phosphorus remaining in the second active metal solution may react with the iron salt to be precipitated in the form of iron phosphate (e.g., FePO₄), and then may be removed through a solid-liquid separation. Further, iron and aluminum remaining in the second active metal solution may also form a precipitate and may be removed through a solid-liquid separation.

In some embodiments, the iron salt may be added in an amount required to adjust a molar ratio of iron (Fe) and phosphorus (P) included in the second active metal solution to 1: 1. Accordingly, FePO₄ may be more effectively precipitated, so that a remaining concentration of phosphorus may become low, and purity and yield of the recovered lithium precursor may be further increased.

In some embodiments, the lithium hydroxide aqueous solution may not include a salt of an alkali metal or an alkaline earth metal other than lithium.

For example, the aqueous lithium hydroxide solution may serve as a neutralizing agent or a base, and includes lithium ions (Li⁺), thereby preventing other ions (e.g., ions of an alkali metal or an alkaline earth metal) from remaining as impurities. Thus, lithium hydroxide may be easily obtained by an electrodialysis, and the high-purity lithium precursor may be recovered.

For example, if an aqueous sodium hydroxide solution, an aqueous potassium hydroxide solution and/or an aqueous ammonia solution is used instead of the aqueous lithium hydroxide solution, impurities such as sodium and potassium may remain, thereby lowering the purity of the recovered lithium precursor.

In some embodiments, the lithium hydroxide aqueous solution may be added in an amount of 0.1 weight percent (wt%) to 0.5 wt% based on a total weight of the second active metal solution. For example, an input amount of the lithium hydroxide aqueous solution may be in a range from 0.1 wt% to 0.45 wt%, from 0.1 wt% to 0.4 wt%, from 0.15 wt% to 0.5 wt%, or from 0.15 wt% to 0.3 wt% based on the total weight of the second active metal solution.

Within this range, the aqueous lithium hydroxide solution may serve as the neutralizing agent to more effectively precipitate phosphorus remaining in the second active metal solution. Therefore, a concentration of impurities remaining in the third active metal solution after a solid-liquid separation may be lowered, and the purity of the recovered lithium precursor may be increased.

For example, in process S40, a lithium precursor may be recovered from the third active metal solution.

The third active metal solution may include lithium sulfate, lithium chloride or lithium nitrate, and may not contain alkali metal ions (e.g., Na+, K+) other than lithium or may include a trace amount of the alkali metal ions. The lithium precursor may be lithium.

In some embodiments, lithium sulfate, lithium chloride or lithium nitrate may be converted into lithium hydroxide through an electrodialysis to recover the lithium precursor.

For example, the electrodialysis may be performed through a bipolar electrodialysis apparatus including a cathode and an anode facing each other with an ion exchange membrane therebetween.

For example, according to the following Equations 1 to 3, a hydrolysis reaction may be performed in the bipolar electrodialysis apparatus. Accordingly, lithium ions (Li⁺) (e.g., moving to the cathode) and sulfate ions (SO₄²⁻), chloride ions (Cl⁻) or nitrate ions (NO³⁻) (e.g., moving to the anode) may be separated and transferred by the ion exchange membrane to form lithium hydroxide and an acid. Lithium hydroxide may be collected as the lithium precursor.

[Equation 1] Li₂SO₄ + 2H₂O → 2LiOH + H₂SO₄

[Equation 2] LiCl + H₂O → LiOH + HCl

[Equation 3] LiNO₃ + H₂O → LiOH + HNO₃

In some embodiments, a portion of lithium hydroxide obtained through the electrodialysis may be recycled in the formation of the third active metal solution (the process S30). Accordingly, a used amount of the lithium hydroxide aqueous solution may be reduced, and thus eco-friendliness and productivity of the process may be further improved.

In some embodiments, sulfuric acid, hydrochloric acid or nitric acid produced through the electrodialysis may be recycled in the formation of the mixture (the process S10).

As shown in Equations 1 to 3, sulfate ions (SO₄²⁻), chloride ions (Cl⁻) or nitrate ions (NO³⁻) separated by the electrodialysis may react with water to form sulfuric acid, hydrochloric acid or nitric acid. The produced sulfuric acid, hydrochloric acid or nitric acid may be used as the acid contained in the acidic leaching liquid added in the process S10.

Accordingly, an amount of the acidic leaching liquid used in the S 10 process may be reduced, thereby improving process efficiency, and environmental pollution may be significantly reduced.

Hereinafter, experimental examples including Examples and Comparative Examples will be provided.

### Examples and Comparative Examples

An acidic leaching liquid containing 32g of sulfuric acid and 40g of hydrogen peroxide relative to 100g of a lithium iron phosphate-based active material as a scrap metal was introduced and reacted for 2 hours at 1atm, 80°C and 250rpm to obtain a mixture containing a first active metal solution and a leached (a first leaching).

Thereafter, a second active metal solution was obtained from the mixture using a solid-liquid separation apparatus, and a washing solution obtained by washing (a first washing) the separated leached residue with water was added to the second active metal solution.

A washing solution obtained by washing the leached residue again (a second washing) after the washing with water was added to a mixture (a secondary leaching) including a first active metal solution and a leached residue obtained by the same method, and then a solution obtained by a solid-liquid separation was added to the second active metal solution.

Thereafter, a base aqueous solution (a neutralizing agent) and iron sulfate (Fe₂(SO₄)₃) according to the following Table 1 were added to the second active metal solution, and a precipitate was separated by a solid-liquid separation apparatus to obtain a third active metal solution.

**[Table 1]**

| | Example 1 | Example 2 | Comparative Example 1 | Comparative Example 2 | Comparative Example 3 |
|---|---|---|---|---|---|
| Fe₂(SO₄)₃ margin¹⁾ | 1 | 1 | 0 | 0 | 1 |
| neutralizing agent | LiOH | LiOH | LiOH | NaOH | NaOH |
| amount of neutralizing agent ²⁾ | 0.15 | 0.3 | 0.15 | 0.25 | 0.25 |

| | | | | | |
|---|---|---|---|---|---|
| ¹⁾ Fe₂(SO₄)₃ margin: an amount of iron sulfate (Fe₂(SO₄)₃) required to adjust a molar ratio of iron (Fe) and phosphorus (P) in the second active metal solution to 1: 1 ²⁾ Input amount (wt%) based on a total weight of the second active metal solution | | | | | |

### Experimental Example

### 1. Metal concentration of lithium iron phosphate-based active material before first leaching

Concentrations of metals included in the lithium iron phosphate-based active material before the acid leaching liquid was added are shown in Table 2 below.

**[Table 2]**

| Metal | Li | Fe | P | Mn | Al | Mg | Ca | Na |
|---|---|---|---|---|---|---|---|---|
| wt% | 4.5 | 34.5 | 20.3 | 0.0069 | 0.0047 | 0.0025 | 0.0019 | 0.016 |

### 2. Metal concentration after first and second teachings

(1) Percentages (leaching ratio of Li, Fe and P) of concentrations of Li, Fe, and P included in the second active metal solution (before the addition of the washing solution) relative to concentrations of Li, Fe and P included in the lithium iron phosphate-based active material before the addition of the acid leaching liquid are shown in Table 3 below.

**[Table 3]**

| | Li | Fe | P |
|---|---|---|---|
| leaching ratio | 94% | 0.4% | 0.9% |

As shown in Table 3, lithium was selectively leached.

(2) Concentrations of metals contained in the second active metal solution (before the addition of the washing solution) (a), the washing solution obtained by the first washing (b), the washing solution obtained by the second washing (c), and the second active metal solution to which the solution obtained by the solid-liquid separation after the second leaching was added (d) are shown in Table 4 below.

**[Table 4]**

| | unit | a | b | c | d |
|---|---|---|---|---|---|
| Li | wt% | 1.35 | 0.64 | 0.31 | 1.5 |
| Fe | wt ppm | 62 | 210 | 110 | 100 |
| P | wt ppm | 240 | 170 | 100 | 160 |
| Na | wt ppm | 36 | 11 | 0 | 39 |
| Al | wt ppm | less than 10 | less than 10 | less than 10 | less than 10 |
| Mg | wt ppm | less than 10 | less than 10 | less than 10 | less than 10 |
| Ca | wt ppm | less than 10 | less than 10 | less than 10 | less than 10 |
| Mn | wt ppm | less than 10 | less than 10 | less than 10 | less than 10 |

Referring to Table 4, lithium remaining in the leached residue after the first leaching was recovered from the washing solution obtained by the first washing, and lithium was further recovered through the additional washing and the second leaching, so that the second active metal solution containing high concentration of lithium was obtained.

### 3. Metal concentration in the third active metal solution

Concentrations (unit: weight ppm) of metals included in the third active metal solution according to Examples and Comparative Examples was shown in Table 5 below.

**[Table 5]**

| | Example 1 | Example 2 | Comparative Example 1 | Comparative Example 2 | Comparative Example 3 |
|---|---|---|---|---|---|
| Fe | 40 | less than 10 | 34 | 11 | less than 10 |
| P | less than 10 | less than 10 | 71 | 37 | less than 10 |
| Na | 37 | 38 | 41 | 1400 | 1700 |

Referring to Tables 1 and 5, the concentrations of iron, phosphorus and sodium, which were impurities, in the third active metal solution according to Examples were less than those in the third active metal solution according to Comparative Examples.

The third active metal solution according to Comparative Example 1 where the lithium hydroxide aqueous solution was used, but iron sulfate was not used had the high phosphorus concentration. The sodium concentration was high in the third active metal solutions according to Comparative Examples 2 and 3 using the sodium hydroxide aqueous solution as the neutralizing agent.

Further, the iron concentration in the third active metal solution according to Example 2 where the input amount of the lithium hydroxide aqueous solution was high was less than that in the third active metal solution according to Example 1.

Therefore, in the method according to the invention, mixing of the impurities was prevented and the lithium precursor was recovered with high purity and high yield.

## Claims

1. A method of recovering an active metal of a lithium secondary battery, comprising:
adding an acidic leaching liquid to a material to be recovered which contains a lithium metal oxide to form a mixture including a first active metal solution and a leached residue;
subjecting the formed mixture to solid-liquid separation for separating the first active metal solution from the leached residue to form a second active metal solution;
adding a lithium hydroxide aqueous solution containing an iron salt to the second active metal solution to form a third active metal solution from which impurities are removed or reduced; and
recovering a lithium precursor from the third active metal solution.

2. The method of claim 1, further comprising:
washing the leached residue to generate a washing liquid; and
supplying the washing liquid to the mixture or the second active metal solution.

3. The method of claim 2, wherein the washing is repeatedly performed in a plurality of cycles,
the washing liquid generated from earlier cycles of the plurality of cycles is supplied to the second active metal solution, and
the washing liquid generated from later cycles of the plurality of cycles is supplied to the mixture.

4. The method according to any one of claims 1 to 3, wherein the lithium metal oxide includes a lithium iron phosphate-based active material, and
the first active metal solution includes lithium sulfate, lithium chloride or lithium nitrate, and the leached residue includes an iron phosphate-based material.

5. The method of any one of claims 1 to 4, wherein the material to be recovered is obtained by pulverizing a waste lithium secondary battery.

6. The method of any one of claims 1 to 5, wherein the impurities contain iron (Fe), phosphorus (P) and aluminum (Al).

7. The method of any one of claims 1 to 6, wherein the iron salt includes iron sulfate, iron chloride or iron nitrate, and a residual phosphorus is precipitated from the second active metal solution in the form of iron phosphate.

8. The method of any one of claims 1 to 7, wherein the lithium hydroxide aqueous solution does not contain a salt of an alkali metal other than lithium or an alkaline earth metal.

9. The method of any one of claims 1 to 8, wherein recovering the lithium precursor comprises converting lithium sulfate, lithium chloride or lithium nitrate into lithium hydroxide by an electrodialysis.

10. The method of claim 9, further comprising recycling a portion of lithium hydroxide generated by the electrodialysis to the formation of the third active metal solution.

11. The method of claim 9 or claim 10, wherein the acidic leaching liquid includes sulfuric acid, hydrochloric acid or nitric acid, and
the method further comprises recycling sulfuric acid, hydrochloric acid or nitric acid produced by the electrodialysis to the formation of the mixture.

12. The method of any one of claims 1 to 11, wherein the acidic leaching liquid includes at least one oxidizing agent selected from the group consisting of hydrogen peroxide, oxygen, ozone and lithium persulfate.

13. The method of any one of claims 1 to 12, wherein the lithium hydroxide aqueous solution is added in an amount from 0.1 wt% to 0.5 wt%, preferably 0.1 wt% to 0.4 wt%, more preferably 0.15 wt% to 0.3 wt% based on a total weight of the second active metal solution.
